# EUROPEAN PATENT APPLICATION

(11) **EP 4 640 300 A1**
(43) Date of publication of application: **29.10.2025**
(21) Application number: 23922954.5
(22) Date of filing: 22.12.2023
(51) Int. Cl.: B01D 53/62, B01D 53/14, B01D 53/78, C01B 32/50

(54) **CARBON DIOXIDE RECOVERY SYSTEM AND OPERATION METHOD THEREFOR**

(30) Priority: 13.02.2023 JP 2023020265
(71) Applicant: Mitsubishi Heavy Industries, Ltd., Tokyo 100-8332 (JP)
(72) Inventor: OTANI Akihito, Yokohama-shi, Kanagawa 220-0012 (JP); KAMIJO Takashi, Yokohama-shi, Kanagawa 220-8401 (JP); MIYAMOTO Osamu, Yokohama-shi, Kanagawa 220-8401 (JP); SORIMACHI Yoshiki, London W45YA (GB)
(74) Representative: Studio Torta S.p.A.
(86) International application number: PCT/JP2023/046284
(87) International publication number: WO 2024/171621

(57) **Abstract**

Provided is a carbon dioxide recovery system including: a carbon dioxide recovery device having a carbon dioxide recovery device body, which includes an absorption tower that causes carbon dioxide to be absorbed in a process fluid, a regeneration tower that regenerates the process fluid by heating the process fluid to separate the carbon dioxide from the process fluid, and a circulation line through which the process fluid is circulated between the absorption tower and the regeneration tower, and a tank that is connected to the carbon dioxide recovery device body; a heating steam generation device that generates heating steam; a process fluid heater that performs heat exchange between the heating steam and the process fluid in the regeneration tower; and a tank storage line that supplies the tank of the carbon dioxide recovery device with steam condensate ejected from the process fluid heater.

## Description

### Technical Field

The present disclosure relates to a carbon dioxide recovery system and an operation method therefor.

This application claims priority of Japanese Patent Application No. 2023-020265 filed in Japan on February 13, 2023, the contents of which are incorporated herein by reference.

### Background Art

A carbon dioxide recovery system that recovers carbon dioxide contained in a gas such as exhaust gas is known. In such a carbon dioxide recovery system, there is one including a regeneration tower that heats an absorption liquid that has absorbed carbon dioxide to separate the carbon dioxide and regenerate the absorption liquid. A reboiler for heating the absorption liquid may be connected to the regeneration tower. As a heat source of the reboiler, a part of heating steam generated in another facility adjacent to the reboiler may be used. The steam that has been heat-exchanged by the reboiler is cooled and returned to another facility adjacent to the reboiler as steam condensate. However, in the reboiler, in a case where the absorption liquid leaks, there is a possibility of the absorption liquid being mixed with the steam condensate. When the absorption liquid is mixed with the steam condensate, there is a possibility that the facility that supplies the heating steam may be affected. Therefore, in the carbon dioxide recovery system as described above, the presence or absence of the mixing of the absorption liquid with the steam condensate is detected.

PTL 1 discloses a technique for detecting leakage of an absorption liquid component into steam condensate discharged from a reboiler in a carbon dioxide recovery system that recovers carbon dioxide from an exhaust gas. A carbon dioxide recovery system of PTL 1 includes an upstream line through which heating steam is supplied to a reboiler and a downstream line through which steam condensate is discharged from the reboiler, and accurately monitors and detects leakage of an absorption liquid component by measuring a physical quantity of the absorption liquid component in the steam condensate obtained by cooling and condensing the heating steam of the upstream line and measuring a physical quantity of the absorption liquid component in the steam condensate discharged from the reboiler.

### Citation List

### Patent Literature

[PTL 1] Japanese Patent No. 6913604

### Summary of Invention

### Technical Problem

In the carbon dioxide recovery system as in PTL 1, when the recovery of carbon dioxide is started, there is a case where a facility side or the like that supplies the heating steam requires a precise water quality inspection of the steam condensate. Such a water quality inspection needs to be performed at another place by taking out the steam condensate discharged from the reboiler. It takes a certain amount of time to complete the water quality inspection, and the water quality of the steam condensate discharged from the reboiler during this period is not guaranteed. Therefore, the steam condensate discharged from the reboiler cannot be returned to the facility side to which the heating steam is supplied, and it is necessary to store the steam condensate in a tank or the like at least until the water quality inspection is completed. However, due to the circumstances of the site space or the like, it may be difficult to install a tank for storing such steam condensate.

The present disclosure has been made in view of the above-described circumstances, and provides a carbon dioxide recovery system and an operation method therefor, in which it is possible to achieve saving space.

### Solution to Problem

In order to solve the above problems, the following configuration is adopted.

According to an aspect of the present disclosure, there is provided a carbon dioxide recovery system including: a carbon dioxide recovery device including a carbon dioxide recovery device body and a tank that is connected to the carbon dioxide recovery device body, in which the carbon dioxide recovery device body includes an absorption column that causes carbon dioxide contained in a carbon dioxide-containing gas to be absorbed into a process fluid, a regeneration tower that regenerates the process fluid by heating the process fluid to separate the carbon dioxide from the process fluid, and a circulation line through which the process fluid circulates between the absorption column and the regeneration tower; a heating steam generation device that generates heating steam; a process fluid heater having a reboiler that exchanges heat between the heating steam and the process fluid in the regeneration tower; and a tank storage line through which steam condensate that has come out of the reboiler is supplied to the tank of the carbon dioxide recovery device.

According to an aspect of the present disclosure, there is provided an operation method for a carbon dioxide recovery system including a carbon dioxide recovery device including a carbon dioxide recovery device body and a tank that is connected to the carbon dioxide recovery device body, in which the carbon dioxide recovery device body includes an absorption column that causes carbon dioxide contained in a carbon dioxide-containing gas to be absorbed into a process fluid, a regeneration tower that regenerates the process fluid by heating the process fluid to separate the carbon dioxide from the process fluid, and a circulation line through which the process fluid circulates between the absorption column and the regeneration tower, a heating steam generation device that generates heating steam, and a process fluid heater having a reboiler that exchanges heat between the heating steam and the process fluid of the regeneration tower, the operation method including: a tank supply step of supplying steam condensate, which has come out of the reboiler, to the tank of the carbon dioxide recovery device when the carbon dioxide recovery device body is started; an inspection step of inspecting for mixing of the process fluid into the steam condensate, which has come out of the reboiler, in parallel with the tank supply step; and a switching step of switching a supply destination of the steam condensate, which has come out of the reboiler, from the tank of the carbon dioxide recovery device to the heating steam generation device when it is determined in the inspection step that there is no mixing of the process fluid.

### Advantageous Effects of Invention

According to the present disclosure, it is possible to achieve space saving.

### Brief Description of Drawings

Fig. 1 is a diagram showing a schematic configuration of a carbon dioxide recovery system in a first embodiment of the present disclosure.
Fig. 2 is a flowchart showing an operation method for the carbon dioxide recovery system in the first embodiment of the present disclosure.
Fig. 3 is a diagram showing a schematic configuration of a carbon dioxide recovery system in a second embodiment of the present disclosure.
Fig. 4 is a flowchart showing an operation method for the carbon dioxide recovery system in the second embodiment of the present disclosure.
Fig. 5 is a diagram showing a schematic configuration of a carbon dioxide recovery system in a first modification example of the embodiment of the present disclosure.
Fig. 6 is a diagram showing a schematic configuration of a carbon dioxide recovery
system in a second modification example of the embodiment of the present disclosure. Description of Embodiments

Next, a carbon dioxide recovery system and an operation method therefor according to an embodiment of the present disclosure will be described with reference to the drawings.

### (First Embodiment)

A carbon dioxide recovery system in the present embodiment recovers carbon dioxide from a carbon dioxide-containing gas containing carbon dioxide. Examples of the carbon dioxide-containing gas include exhaust gas of a device that combusts fuel of a gas turbine, an internal combustion engine, a boiler, or the like.

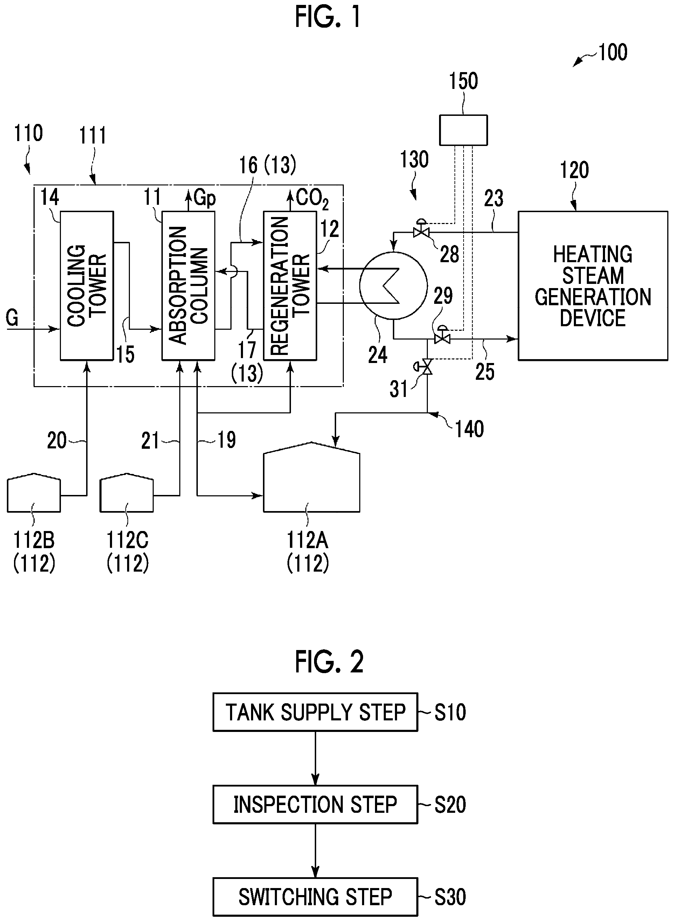

Fig. 1 is a diagram showing a schematic configuration of a carbon dioxide recovery system in a first embodiment of the present disclosure.

As shown in Fig. 1, a carbon dioxide recovery system 100 in the first embodiment includes a carbon dioxide recovery device 110, a heating steam generation device 120, a process fluid heater 130, a tank storage line 140, and a control device 150.

### (Carbon Dioxide Recovery Device)

The carbon dioxide recovery device 110 includes a carbon dioxide recovery device body 111 and a tank 112.

### (Carbon Dioxide Recovery Device Body)

The carbon dioxide recovery device body 111 includes at least an absorption column 11, a regeneration tower 12, and a circulation line 13. The carbon dioxide recovery device body 111 exemplified in the present embodiment includes a cooling tower 14 and a carbon dioxide-containing gas supply line 15 in addition to the absorption column 11, the regeneration tower 12, and the circulation line 13. The cooling tower 14 brings a carbon dioxide-containing gas G into contact with cooling water to reduce the temperature of the carbon dioxide-containing gas G. In addition, the cooling tower 14 removes sulfur oxide contained in the carbon dioxide-containing gas G by using an alkaline chemical such as an aqueous solution of caustic soda. The carbon dioxide-containing gas supply line 15 through which the carbon dioxide-containing gas G cooled by the cooling tower 14 and from which the sulfur oxide is removed is supplied to the absorption column 11.

The absorption column 11 generates a rich liquid R by bringing the carbon dioxide-containing gas G containing carbon dioxide into contact with an absorption liquid (process fluid). The absorption liquid is capable of absorbing carbon dioxide by coming into contact with the carbon dioxide-containing gas G, and the rich liquid R is the absorption liquid in a state of having absorbed the carbon dioxide of the carbon dioxide-containing gas G. The carbon dioxide-containing gas G is introduced into the absorption column 11 using a blower (not shown) or the like. Examples of the absorption liquid include an amine-based absorption liquid that absorbs carbon dioxide by a chemical absorption method. Examples of the amine-based absorption liquid include monoethanolamine (MEA).

The carbon dioxide-containing gas G introduced into the absorption column 11 comes into contact with the absorption liquid (lean liquid Le) sprayed from the upper portion of the absorption column 11 by a nozzle or the like. In this manner, the carbon dioxide of the carbon dioxide-containing gas G is absorbed in the absorption liquid (lean liquid Le), and the absorption liquid becomes the rich liquid R. The remaining treated gas Gp from which the carbon dioxide is absorbed by the absorption liquid is discharged from the upper portion of the absorption column 11. In the absorption column 11 of the present embodiment, before the treated gas Gp is discharged to the outside, the absorption liquid contained in the treated gas Gp is removed by using an acidic chemical such as sulfuric acid. The treated gas Gp discharged from the absorption column 11 may be washed with the rinse water to remove the absorption liquid or the like.

The regeneration tower 12 generates a lean liquid Le which is an absorption liquid capable of absorbing carbon dioxide. Specifically, the regeneration tower 12 generates the lean liquid Le by heating the rich liquid R and releasing the carbon dioxide from the rich liquid R. A process fluid heater 130 for heating the rich liquid R is connected to the regeneration tower 12 of the present embodiment. The carbon dioxide gas (CO₂) released from the rich liquid R is discharged from the upper portion of the regeneration tower 12.

The circulation line 13 through which the absorption liquid is circulated between the absorption column 11 and the regeneration tower 12. The circulation line 13 includes a rich liquid line 16 and a lean liquid line 17. The rich liquid line 16 guides the rich liquid R from the absorption column 11 to the regeneration tower 12. The lean liquid line 17 guides the lean liquid Le from the regeneration tower 12 to the absorption column 11.

### (Tank)

The tank 112 is connected to the carbon dioxide recovery device body 111. In the present embodiment, a case where the tank 112 includes one process fluid tank 112A and two chemical tanks 112B and 112C is exemplified.

The process fluid tank 112A is capable of storing the absorption liquid used in the carbon dioxide recovery device body 111. The process fluid tank 112A of the present embodiment is connected to both the absorption column 11 and the regeneration tower 12 via a process fluid retract line 19. For example, the process fluid tank 112A can retreat the absorption liquid stored in the absorption column 11 and the regeneration tower 12 during maintenance of the absorption column 11 and the regeneration tower 12, or can store the wastewater containing the absorption liquid component generated during the cleaning of the absorption column 11 and the regeneration tower 12. The use of the process fluid tank 112A is not limited to the above-described use, and may be used as a reservoir tank or the like of the absorption liquid used in the absorption column 11 and the regeneration tower 12, for example.

The chemical tanks 112B and 112C store chemicals used in the carbon dioxide recovery device body 111. The chemical tank 112B is connected to the cooling tower 14 via a first chemical supply line 20. The chemical tank 112B stores an alkaline chemical such as an aqueous solution of caustic soda used in the cooling tower 14. The alkaline chemical stored in the chemical tank 112B is supplied to the cooling tower 14 via the first chemical supply line 20. The chemical tank 112C is connected to the absorption column 11 via a second chemical supply line 21. The chemical tank 112C stores an acidic chemical such as sulfuric acid used in the absorption column 11. The acidic chemical stored in the chemical tank 112C is supplied to the absorption column 11 via the second chemical supply line 21.

### (Heating Steam Generation Device)

The heating steam generation device 120 generates heating steam. As the heating steam generation device 120, a device that generates steam by using exhaust heat of a facility that discharges the carbon dioxide-containing gas G can be exemplified. A portion or all of the heating steam generated by the heating steam generation device 120 is supplied to the process fluid heater 130.

### (Process Fluid Heater)

The process fluid heater 130 heats the rich liquid R by exchanging heat between the rich liquid R, which is the process fluid, and the heating steam, which is a heat medium. The process fluid heater 130 of the present embodiment includes a heating steam line 23, a reboiler 24, and a steam condensate line 25. The heating steam line 23 through which the heating steam generated by the heating steam generation device 120 is supplied to the reboiler 24. The reboiler 24 exchanges heat between the heating steam supplied by the heating steam line 23 and the rich liquid R as a process fluid. The steam condensate line 25 through which the steam condensate condensed by exchanging heat with the rich liquid R is returned to the heating steam generation device 120. The heating steam line 23 is provided with a first control valve 28 that opens and closes a flow path through which the heating steam flows. The steam condensate line 25 is provided with a second control valve 29 that opens and closes a flow path through which the steam condensate flows. The first control valve 28 and the second control valve 29 can be opened and closed by a control signal output from the control device 150 (described later).

### (Tank Storage Line)

The tank storage line 140 through which the steam condensate that has come out of the process fluid heater 130 is supplied to the tank 112 of the carbon dioxide recovery device 110. The tank storage line 140 exemplified in the present embodiment is capable of supplying the steam condensate that has come out of the process fluid heater 130 to the process fluid tank 112A. The tank storage line 140 of the present embodiment is branched and connected to the steam condensate line 25. More specifically, the tank storage line 140 of the present embodiment allows a steam condensate line 25 on the side closer to the process fluid heater 130 than the second control valve 29 and the process fluid tank 112A to communicate with each other. The tank storage line 140 includes a third control valve 31 that opens and closes a flow path through which the steam condensate flows. The third control valve 31 can be opened and closed by the control signal output from the control device 150 (described later).

### (Control Device)

The control device 150 controls the operations of the first control valve 28, the second control valve 29, and the third control valve 31. More specifically, the control device 150 switches between a state where the steam condensate that has come out of the process fluid heater 130 is returned to the heating steam generation device 120 via the steam condensate line 25 and a state where the steam condensate that has come out of the process fluid heater 130 is introduced into the process fluid tank 112A via the tank storage line 140, based on an operation input by an operator or the like. The first control valve 28 of the present embodiment is closed when it is necessary to stop the supply of the heating steam, and is opened in other cases. As the control device 150, a so-called computer device including a central processing unit (CPU), a read only memory (ROM), a random access memory (RAM), a storage, and a signal transmission/reception module can be exemplified. The control device 150 realizes a functional configuration of switching the supply destination of the steam condensate between the heating steam generation device 120 and the tank 112 by executing a program stored in advance in a storage device such as a ROM or a storage device by the CPU.

### (Operation Method)

Next, an operation method for the carbon dioxide recovery system 100 having the above-described configuration will be described with reference to the drawings.

Fig. 2 is a flowchart showing an operation method for the carbon dioxide recovery system in the first embodiment of the present disclosure.

As shown in Fig. 2, the operation method for the carbon dioxide recovery system 100 in the first embodiment includes a tank supply step S10, an inspection step S20, and a switching step S30.

In the tank supply step S10, when the carbon dioxide recovery device body 111 is started, the steam condensate that has come out of the process fluid heater 130 is supplied to the tank 112 of the carbon dioxide recovery device 110. In the tank supply step S10 of the present embodiment, the steam condensate that has come out of the process fluid heater 130 is supplied to the process fluid tank 112A of the carbon dioxide recovery device 110. At this time, the first control valve 28 is controlled to be in an open state, the second control valve 29 is controlled to be in a closed state, and the third control valve 31 is controlled to be in an open state. Before the carbon dioxide recovery device body 111 is started, the first control valve 28 is closed, and the heating steam is not supplied to the process fluid heater 130.

In the tank supply step S10, the absorption liquid stored in the process fluid tank 112A is diluted by the steam condensate whose water quality is not guaranteed, which is discharged from the process fluid heater 130. In a case where the absorption liquid is an absorption liquid containing water such as an amine solution, the carbon dioxide recovery device body 111 can evaporate the moisture contained in the absorption liquid to adjust the concentration. Therefore, the absorption liquid diluted with the steam condensate inside the process fluid tank 112A can be returned to the carbon dioxide recovery device body 111 and used as the absorption liquid. In addition, even when the absorption liquid is not stored in the process fluid tank 112A, the steam condensate whose water quality is not guaranteed, which is discharged from the process fluid heater 130 may be temporarily stored in the empty process fluid tank 112A, and may be returned to the carbon dioxide recovery device body 111 after the switching step S30 described later and evaporated.

In the inspection step S20, the mixing of the absorption liquid into the steam condensate that has come out of the process fluid heater 130 is inspected in parallel with the tank supply step S10. For example, the sampling of the steam condensate for inspection can be performed via a sampling pipe (not shown). The inspection in the present embodiment is a precise water quality inspection, and is performed by bringing the inspection to an inspection place (for example, a laboratory or the like) different from the carbon dioxide recovery system 100.

In the switching step S30, in a case where it is determined in the inspection step S20 that there is no mixing of the process fluid with the steam condensate, the supply destination of the steam condensate that has come out of the process fluid heater 130 is switched from the tank 112 (process fluid tank 112A) of the carbon dioxide recovery device 110 to the heating steam generation device 120. In this case, the first control valve 28 is brought into an open state, the second control valve 29 is brought into an open state, and the third control valve 31 is brought into a closed state. In this manner, the carbon dioxide recovery system 100 transitions from the operating state at the time of start-up to the normal operating state. When the carbon dioxide recovery system 100 is stopped, for example, the first control valve 28 may be in a closed state, the second control valve 29 may be in a closed state, and the third control valve 31 may be in an open state.

### (Action Effect)

According to the first embodiment described above, when the carbon dioxide recovery device body 111 is started, the steam condensate that comes out of the process fluid heater 130 can be supplied to the process fluid tank 112A by the tank storage line 140 without being returned to the heating steam generation device 120. Further, since the steam condensate is supplied to the process fluid tank 112A used in the carbon dioxide recovery device 110 until it is confirmed that there is no problem with the steam condensate when the carbon dioxide recovery device body 111 is started, it is possible to create a state where the steam condensate is not returned to the heating steam generation device 120 without providing a dedicated tank for temporarily storing the steam condensate.

Therefore, it is possible to suppress an increase in the number of tanks and to achieve a space-saving effect.

In the first embodiment, the system further includes the third control valve 31 provided in the tank storage line 140, the second control valve 29 provided in the steam condensate line 25 closer to the heating steam generation device 120 than the tank storage line 140, and the control device 150 that controls the second control valve 29 and the third control valve 31. Therefore, the supply destination of the steam condensate can be automatically switched, and the burden on the operator can be reduced. In addition, the opening and closing can be quickly performed even in a case where the second control valve 29 and the third control valve 31 are disposed apart from each other.

### (Second Embodiment)

Next, a second embodiment of the present disclosure will be described based on the drawings. In the second embodiment, a water quality monitoring device is provided in the steam condensate line with respect to the first embodiment described above. Therefore, the same reference numerals will be assigned to elements the same as those according to the above-described first embodiment, and repeated description will be omitted.

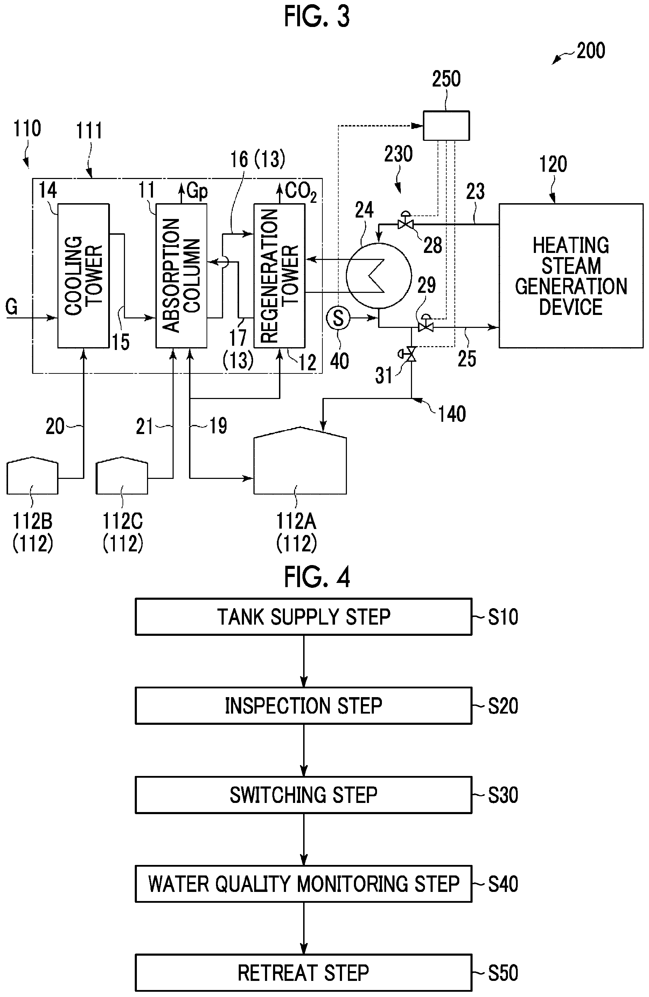

Fig. 3 is a diagram showing a schematic configuration of a carbon dioxide recovery system in the second embodiment of the present disclosure.

As shown in Fig. 3, a carbon dioxide recovery system 200 in the second embodiment includes a carbon dioxide recovery device 110, a heating steam generation device 120, a process fluid heater 230, a tank storage line 140, and a control device 250.

The process fluid heater 230 includes a heating steam line 23, a reboiler 24, a steam condensate line 25, and a water quality monitoring device 40.

### (Water Quality Monitoring Device)

The water quality monitoring device 40 measures the water quality of the steam condensate that has come out of the reboiler 24. As the water quality monitoring device 40, a configuration capable of measuring the electrical conductivity, pH, total organic carbon (TOC), and the like of the steam condensate that has come out of the reboiler 24 can be exemplified. When the electrical conductivity, pH, and TOC of the steam condensate that has come out of the reboiler 24 deviate from a predetermined range, it can be determined that there is abnormal water quality. In addition, since the water quality monitoring device 40 measures the water quality of the flowing steam condensate, the measurement of the water quality is less accurate than the inspection in the inspection step S20 of the first embodiment described above.

### (Operation Method)

Fig. 4 is a flowchart showing an operation method for the carbon dioxide recovery system in the second embodiment of the present disclosure.

As shown in Fig. 4, the operation method for the carbon dioxide recovery system 200 includes a tank supply step S10, an inspection step S20, a switching step S30, a monitoring step S40, and a retreat step S50.

In the operation method for the carbon dioxide recovery system 200 in the second embodiment, first, at the time of the start of the carbon dioxide recovery device body 111, the tank supply step S10, the inspection step S20, and the switching step S30 are performed as in the first embodiment. Thereafter, the monitoring step S40 is started at a timing of transition to the normal operation.

In the monitoring step S40, after the switching step S30, it is monitored whether or not the heating steam generation device 120 can receive the steam condensate that has come out of the reboiler 24. Examples of the state in which the heating steam generation device 120 cannot receive the steam condensate that has come out of the reboiler 24 include a case where the water quality of the steam condensate that has come out of the reboiler 24 measured by the water quality monitoring device 40 is abnormal and a case where some problem has occurred on the heating steam generation device 120 side.

The monitoring in the monitoring step S40 may be automatically performed by the control device 250, for example. In this case, the control device 250 may receive the information of the measurement result of the water quality monitoring device 40 and notify the operator or the like of the fact that there is the abnormal water quality by a notification device (not shown) or the like in a case where the measurement result by the water quality monitoring device 40 is not within a predetermined range. In addition, the control device 250 may be capable of receiving an alarm signal output from the heating steam generation device 120 when some problem occurs. The water quality measurement by the water quality monitoring device 40 is not limited to being performed after the switching step S30, and may be performed, for example, from the start of the carbon dioxide recovery device 110. The control device 250 has the same configuration as the control device 150 of the first embodiment except for the configuration related to the water quality monitoring device 40.

In the retreat step S50, in a case where it is determined that the heating steam generation device 120 cannot accept the steam condensate that has come out of the reboiler 24 in the monitoring step S40, the supply destination of the steam condensate that has come out of the reboiler 24 is switched from the heating steam generation device 120 to the tank 112 of the carbon dioxide recovery device 110. In the second embodiment, as in the first embodiment, a case where the process fluid tank 112A is a supply destination of the steam condensate that has come out of the reboiler 24 is shown among the process fluid tank 112A and the chemical tanks 112B and 112C.

### (Action Effect)

According to the second embodiment, in addition to the effects of the first embodiment, after the carbon dioxide recovery system 200 has been shifted to the normal operation, in a case where abnormal water quality occurs in the steam condensate that has come out of the reboiler 24 or some problem occurs in the heating steam generation device 120 and the heating steam generation device 120 is unable to receive the steam condensate that has come out of the reboiler 24, the supply destination of the steam condensate that has come out of the reboiler 24 can be switched from the heating steam generation device 120 to the tank 112 of the carbon dioxide recovery device 110. Therefore, the recovery of the carbon dioxide by the carbon dioxide recovery device 110 can be continued until the tank 112 is filled. Therefore, in a case of erroneous detection of the abnormal water quality or in a case where the problem of the heating steam generation device 120 is temporary, it is possible to suppress the stoppage of the recovery of the carbon dioxide by the carbon dioxide recovery device 110.

### (Other Embodiments)

The present disclosure is not limited to the configuration of the above-described embodiment, and design can be changed within the scope not departing from the concept of the present disclosure.

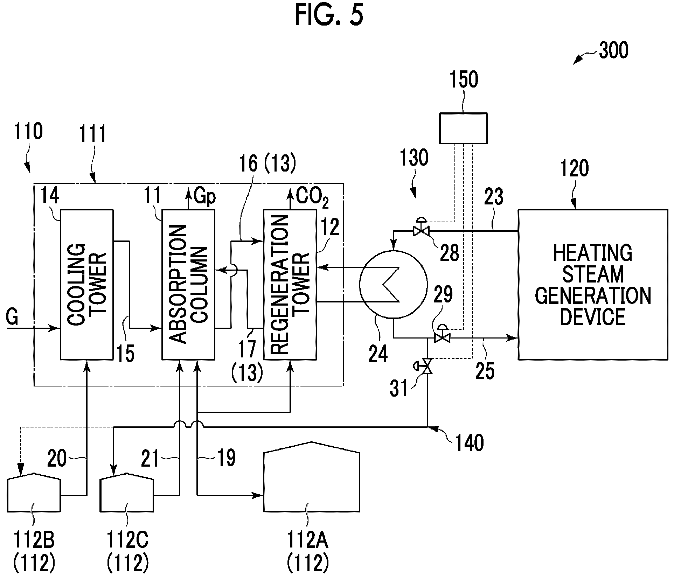

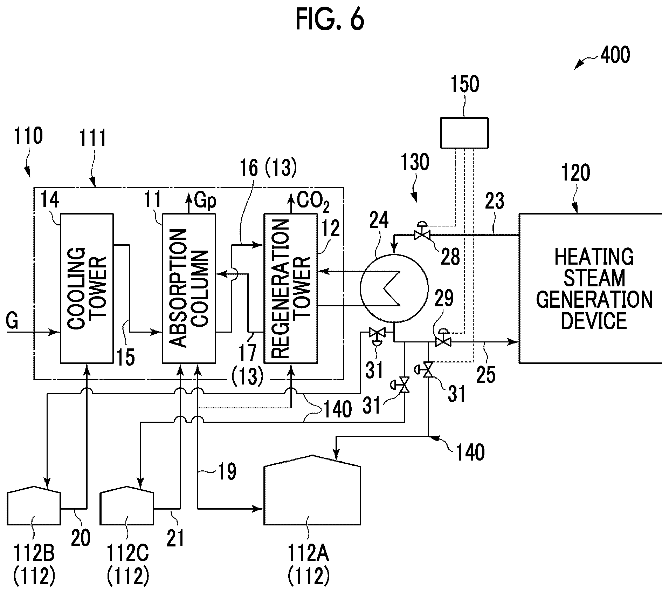

Fig. 5 is a diagram showing a schematic configuration of a carbon dioxide recovery system in a first modification example of the embodiment of the present disclosure. Fig. 6 is a diagram showing a schematic configuration of a carbon dioxide recovery system in a second modification example of the embodiment of the present disclosure.

In the first embodiment and the second embodiment, a case where the tank storage line 140 is connected only to the process fluid tank 112A has been described. However, the tank 112 connected to the tank storage line 140 is not limited to the process fluid tank 112A. For example, as in the first modification example shown in Fig. 5, the chemical tank 112B or the chemical tank 112C may be connected. In this case, the steam condensate can be used to dilute the chemical stored in the chemical tank 112B or the chemical stored in the chemical tank 112C. The reason why the above-described steam condensate can be used to dilute the chemical in this way is that the chemical diluted in the system of the carbon dioxide recovery system 200 in which the process fluid or the like is used is treated even when the process fluid or the like is contained in the steam condensate. Although Fig. 5 shows a case where the first modification example is applied to the first embodiment, the same applies to a case where the first modification example is applied to the second embodiment.

In the first embodiment and the second embodiment, a case where one tank storage line 140 is connected to one tank 112 has been described. However, the present disclosure is not limited to this configuration. For example, as in the second modification example shown in Fig. 6, a plurality of tank storage lines 140 may be provided, and the steam condensate that has come out of the reboiler 24 may be supplied to the plurality of tanks 112. In this way, the amount of steam condensate that can be stored can be increased as compared with a case where the steam condensate is stored in one tank 112. In Fig. 6, a case where the steam condensate is supplied to the three tanks 112 is shown. However, the number of the tanks 112 capable of storing the steam condensate is not limited to three. In addition, Fig. 6 shows a case where the second modification example is applied to the first embodiment in the same manner as Fig. 5, and the same applies to a case where the second modification example is applied to the second embodiment.

In the first embodiment and the second embodiment, a case where one process fluid tank 112A is provided has been exemplified. However, a plurality of process fluid tanks 112A may be provided. Similarly, a plurality of the chemical tanks 112B may be provided, or a plurality of the chemical tanks 112C may be provided. In this case, the tank storage line 140 may be connected only to the same type of tank 112, that is, the plurality of process fluid tanks 112A, or the tank storage line 140 may be connected only to the plurality of chemical tanks 112B and 112C.

In the above-described embodiment, the process fluid tank 112A, the chemical tanks 112B and 112C are exemplified as the tank 112 used by the carbon dioxide recovery device body 111. However, the tank 112 of the carbon dioxide recovery device 110 is not limited to the process fluid tank 112A and the chemical tanks 112B and 112C.

In the first embodiment, the second control valve 29 and the third control valve 31 may be replaced with a three-way valve.

In each of the above-described embodiments, a configuration in which the control devices 150 and 250 automatically open and close the first control valve 28 to the third control valve 31 has been exemplified. However, the present disclosure is not limited to this configuration. For example, the control devices 150 and 250 may be omitted, and the operator may perform the valve opening operation and the valve closing operation.

### <Additional Notes>

The carbon dioxide recovery system and the operation method therefor described in the embodiments are understood as follows, for example.
(1) According to a first aspect, there are provided carbon dioxide recovery systems 100 and 200 including: a carbon dioxide recovery device 110 including a carbon dioxide recovery device body 111 and tanks 112, 112A, 112B, and 112C that are connected to the carbon dioxide recovery device body 111, the carbon dioxide recovery device body including an absorption column 11 that causes carbon dioxide contained in a carbon dioxide-containing gas G to be absorbed into a process fluid, a regeneration tower 12 that regenerates the process fluid by heating the process fluid to separate the carbon dioxide from the process fluid, and a circulation line 13 through which the process fluid circulates between the absorption column 11 and the regeneration tower 12; a heating steam generation device 120 that generates heating steam; process fluid heaters 130 and 230 having a reboiler 24 that exchanges heat between the heating steam and the process fluid in the regeneration tower 12; and a tank storage line 140 through which steam condensate, that has come out of the reboiler 24, is supplied to the tanks 112, 112A, 112B, and 112C of the carbon dioxide recovery device 110.

Examples of the process fluid include an absorption liquid and an amine solution. Examples of the tank include a process fluid tank and a chemical tank. Examples of the carbon dioxide-containing gas include exhaust gas. Examples of the heating steam generation device include a power generation facility and a boiler.

Accordingly, it is possible to make a state where the steam condensate is not returned to the heating steam generation device 120 without providing a dedicated tank for temporarily storing the steam condensate. Therefore, it is possible to suppress an increase in the number of tanks and to achieve a space-saving effect.

(2) According to a second aspect, in the carbon dioxide recovery system, the carbon dioxide recovery systems 100 and 200 of (1) further includes the plurality of tanks 112, 112A, 112B, and 112C, and a plurality of tank storage lines 140 through which the steam condensate, which has come out of the reboiler 24, is supplied to the plurality of tanks 112, 112A, 112B, and 112C.

In this manner, the amount of steam condensate that can be stored can be increased as compared to a case where the steam condensate is stored in one tank 112.

(3) According to a third aspect, in the carbon dioxide recovery system, in the carbon dioxide recovery systems 100 and 200 of (1) or (2), the tank 112 includes at least one of a process fluid tank 112A that stores the process fluid used in the carbon dioxide recovery device body 111 and chemical tanks 112B and 112C that stores a chemical used in the carbon dioxide recovery device body 111, and the steam condensate that has come out of the reboiler 24 is supplied to at least one of the process fluid tank 112A and the chemical tanks 112B and 112C through the tank storage line 140.

Examples of the chemical include caustic soda and sulfuric acid.

Accordingly, the process fluid tank 112A can be used as the tank 112 for storing the steam condensate, and the steam condensate can be used for diluting the process fluid stored in the process fluid tank 112A. In addition, the chemical tanks 112B and 112C can be used as the tank 112 for storing the steam condensate, and the steam condensate can be used for diluting the chemicals stored in the chemical tanks 112B and 112C.

(4) According to a fourth aspect, in the carbon dioxide recovery system, in the carbon dioxide recovery system 200 of any one of (1) to (3), the process fluid heater 230 further includes a water quality monitoring device 40 that measures water quality of the steam condensate that has come out of the reboiler 24.

In this manner, it is possible to detect that the steam condensate coming out of the reboiler 24 has the abnormal water quality. Therefore, it is possible to prevent the steam condensate having the abnormal water quality from being stored in the tank 112 and prevent the steam condensate having the abnormal water quality from returning to the heating steam generation device 120.

(5) According to a fifth aspect, in the carbon dioxide recovery system, the carbon dioxide recovery system of any one of (1) to (4) further includes control valves 29 and 31 capable of switching between a state where the steam condensate that has come out of the reboiler 24 flows into the tanks 112, 112A, 112B, and 112C via the tank storage line 140 and a state where the steam condensate that has come out of the reboiler 24 flows into the heating steam generation device 120, and control devices 150 and 250 that control operations of the control valves 29 and 31.

Examples of the control valve include a second control valve and a third control valve.

Accordingly, the supply destination of the steam condensate can be automatically switched, and the burden on the operator can be reduced.

(6) In an operation method for a carbon dioxide recovery system according to a sixth aspect, there is provided an operation method for carbon dioxide recovery systems 100 and 200 including a carbon dioxide recovery device 110 including a carbon dioxide recovery device body 111 and tanks 112, 112A, 112B, and 112C that are connected to the carbon dioxide recovery device body 111, the carbon dioxide recovery device body including an absorption column 11 that causes carbon dioxide contained in a carbon dioxide-containing gas G to be absorbed into a process fluid, a regeneration tower 12 that regenerates the process fluid by heating the process fluid to separate the carbon dioxide from the process fluid, and a circulation line 13 through which the process fluid circulates between the absorption column 11 and the regeneration tower 12, a heating steam generation device 120 that generates heating steam, and process fluid heaters 130 and 230 having a reboiler 24 that exchanges heat between the heating steam and the process fluid of the regeneration tower 12, the operation method including: tank supply step S10 of supplying steam condensate, which has come out of the reboiler 24, to the tanks 112, 112A, 112B, and 112C of the carbon dioxide recovery device 110 when the carbon dioxide recovery device body 111 is started; an inspection step S20 of inspecting for mixing of the process fluid into the steam condensate, which has come out of the reboiler 24, in parallel with the tank supply step S10; and a switching step S30 of switching a supply destination of the steam condensate, which has come out of the reboiler 24, from the tanks 112, 112A, 112B, and 112C of the carbon dioxide recovery device 110 to the heating steam generation device 120 when it is determined in the inspection step S20 that there is no mixing of the process fluid.

Examples of the process fluid include an absorption liquid and an amine solution. Examples of the tank include a process fluid tank and a chemical tank. Examples of the carbon dioxide-containing gas include exhaust gas. Examples of the heating steam generation device include a power generation facility and a boiler.

Accordingly, it is not necessary to provide a dedicated tank for temporarily storing the steam condensate during the inspection step S20. Therefore, it is possible to suppress an increase in the number of tanks and to achieve a space-saving effect.

(7) According to a seventh aspect, the operation method for a carbon dioxide recovery system, the operation method for a carbon dioxide recovery system of (6) further includes a monitoring step S40 of monitoring whether or not the heating steam generation device 120 is in a state of being capable of receiving the steam condensate that has come out from the reboiler 24, after the switching step S30; and a retreat step S50 of switching the supply destination of the steam condensate that has come out from the reboiler 24 from the heating steam generation device 120 to the tanks 112, 112A, 112B, and 112C of the carbon dioxide recovery device 110, when it is determined in the monitoring step S40 that the heating steam generation device 120 is not capable of receiving the steam condensate.

Accordingly, even in a case where the heating steam generation device 120 temporarily cannot accept the steam condensate after the switching step S30, the recovery of the carbon dioxide by the carbon dioxide recovery device body 111 can be continued.

(8) According to an eighth aspect, in the operation method for a carbon dioxide recovery system, in the operation method for a carbon dioxide recovery system of (6) or (7), in the tank supply step S10, the process fluid is diluted by using the steam condensate that has come out of the reboiler 24.

In this manner, the steam condensate whose water quality is not guaranteed can be effectively used as water for diluting the process fluid.

(9) According to a ninth aspect, in the operation method for operating a carbon dioxide recovery system, in the operation method for a carbon dioxide recovery system of (6) or (7), in the tank supply step S10, a chemical used in the carbon dioxide recovery device body 111 is diluted using the steam condensate that has come out of the reboiler 24.

In this manner, the steam condensate whose water quality is not guaranteed can be used for the dilution of the chemical.

### Industrial Applicability

According to the present disclosure, it is possible to achieve space saving.

### Reference Signs List

11: Absorption column
12: Regeneration tower
13: Circulation line
14: Cooling tower
15: Carbon dioxide-containing gas supply line
16: Rich liquid line
17: Lean liquid line
19: Process fluid retract line
20: First chemical supply line
21: Second chemical supply line
23: Heating steam line
24: Reboiler
25: Steam condensate line
28: First control valve
29: Second control valve
31: Third control valve
40: Water quality monitoring device
100, 200, 300, 400: Carbon dioxide recovery system
110: Carbon dioxide recovery device
111: Carbon dioxide recovery device body
112: Tank
112A: Process fluid tank
112B, 112C: Chemical tank
120: Heating steam generation device
130, 230: Process fluid heater
140: Tank storage line
150, 250: Control device
G: Carbon dioxide-containing gas
S10: Tank supply step
S20: Inspection step
S30: Switching step
S40: Monitoring step
S50: Retreat step

## Claims

1. A carbon dioxide recovery system comprising:
a carbon dioxide recovery device including a carbon dioxide recovery device body and a tank that is connected to the carbon dioxide recovery device body,
in which the carbon dioxide recovery device body includes
an absorption column that causes carbon dioxide contained in a carbon dioxide-containing gas to be absorbed into a process fluid,
a regeneration tower that regenerates the process fluid by heating the process fluid to separate the carbon dioxide from the process fluid, and
a circulation line through which the process fluid circulates between the absorption column and the regeneration tower;
a heating steam generation device that generates heating steam;
a process fluid heater having a reboiler that exchanges heat between the heating steam and the process fluid in the regeneration tower; and
a tank storage line through which steam condensate that has come out of the reboiler is supplied to the tank of the carbon dioxide recovery device.

2. The carbon dioxide recovery system according to claim 1, further comprising:
a plurality of the tanks; and
a plurality of tank storage lines through which the steam condensate, which has come out of the reboiler, is supplied to the plurality of tanks.

3. The carbon dioxide recovery system according to claim 1 or 2,
wherein the tank includes at least one of a process fluid tank that stores the process fluid used in the carbon dioxide recovery device body and a chemical tank that stores a chemical used in the carbon dioxide recovery device body, and
the steam condensate that has come out of the reboiler is supplied to at least one of the process fluid tank and the chemical tank through the tank storage line.

4. The carbon dioxide recovery system according to claim 1 or 2,
wherein the process fluid heater further includes a water quality monitoring device that measures water quality of the steam condensate that has come out of the reboiler.

5. The carbon dioxide recovery system according to claim 1 or 2, further comprising:
a control valve capable of switching between a state where the steam condensate that has come out of the reboiler flows into the tank via the tank storage line and a state where the steam condensate that has come out of the reboiler flows into the heating steam generation device; and
a control device that controls an operation of the control valve.

6. An operation method for a carbon dioxide recovery system including
a carbon dioxide recovery device including a carbon dioxide recovery device body and a tank that is connected to the carbon dioxide recovery device body,
in which the carbon dioxide recovery device body includes
an absorption column that causes carbon dioxide contained in a carbon dioxide-containing gas to be absorbed into a process fluid,
a regeneration tower that regenerates the process fluid by heating the process fluid to separate the carbon dioxide from the process fluid, and
a circulation line through which the process fluid circulates between the absorption column and the regeneration tower,
a heating steam generation device that generates heating steam, and
a process fluid heater having a reboiler that exchanges heat between the heating steam and the process fluid of the regeneration tower, the operation method comprising:
a tank supply step of supplying steam condensate, which has come out of the reboiler, to the tank of the carbon dioxide recovery device when the carbon dioxide recovery device body is started;
an inspection step of inspecting for mixing of the process fluid into the steam condensate, which has come out of the reboiler, in parallel with the tank supply step; and
a switching step of switching a supply destination of the steam condensate, which has come out of the reboiler, from the tank of the carbon dioxide recovery device to the heating steam generation device when it is determined in the inspection step that there is no mixing of the process fluid.

7. The operation method for a carbon dioxide recovery system according to claim 6, further comprising:
a monitoring step of monitoring whether or not the heating steam generation device is in a state of being capable of receiving the steam condensate that has come out of the reboiler, after the switching step; and
a retreat step of switching the supply destination of the steam condensate that has come out of the reboiler from the heating steam generation device to the tank of the carbon dioxide recovery device, when it is determined in the monitoring step that the heating steam generation device is not capable of receiving the steam condensate.

8. The operation method for a carbon dioxide recovery system according to claim 6 or 7,
wherein in the tank supply step, the process fluid is diluted using the steam condensate that has come out of the reboiler.

9. The operation method for a carbon dioxide recovery system according to claim 6 or 7,
wherein in the tank supply step, a chemical used in the carbon dioxide recovery device body is diluted using the steam condensate that has come out of the reboiler.
